# EUROPEAN PATENT APPLICATION

(11) **EP 4 624 522 A1**
(43) Date of publication of application: **01.10.2025**
(21) Application number: 23894638.8
(22) Date of filing: 22.11.2023
(51) Int. Cl.: C08L 9/06, B60C 1/00, C08K 3/013, C08K 3/04, C08K 3/36, C08K 5/548, C08L 101/00

(54) **TIRE RUBBER COMPOSITION, TREAD RUBBER, AND TIRE**

(30) Priority: 25.11.2022 JP 2022188763
(71) Applicant: BRIDGESTONE CORPORATION, Chuo-ku Tokyo 104-8340 (JP)
(72) Inventor: OSHIMA Naoya, Tokyo 104-8340 (JP)
(74) Representative: Marks & Clerk LLP
(86) International application number: PCT/JP2023/042026
(87) International publication number: WO 2024/111634

(57) **Abstract**

To provide a rubber composition for tires capable of highly balancing the wet grip performance, high fuel efficiency, and wear resistance performance of the tire, and achieving an excellent discoloration resistance. To achieve the above-described object, the present disclosure provides a rubber composition including a rubber component, a filler, and a silane coupling agent, wherein the rubber component contains a styrene-butadiene rubber (A) modified by a modifier having at least one atom selected from nitrogen, silicon, and tin and having a glass transition temperature of -50°C or lower, and an unmodified styrene-butadiene rubber (B) having a glass transition temperature at least 30°C higher than that of the styrene-butadiene rubber (A), the filler contains at least silica, and the silane coupling agent contains at least a silane coupling agent (A) having a thiol group and a silane coupling agent (B) having a sulfide bond.

## Description

### TECHNICAL FIELD

The present disclosure relates to a rubber composition for tires, a tread rubber, and a tire.

### BACKGROUND

Conventionally, various studies have been conducted to improve braking performance on wet road surfaces (hereinafter abbreviated as "wet grip performance"), from the perspective of improving the safety of vehicles. For example, PTL 1 below discloses that the braking performance of a tire on both dry and wet road surfaces is enhanced by applying, to the tread rubber of the tire, a rubber composition obtained by blending a thermoplastic resin and a filler containing silica into a rubber component containing 70 mass% or more of natural rubber.

On the other hand, the demand for vehicles with lower fuel consumption is increasing due to the global movement towards reducing carbon dioxide emissions, driven by growing awareness of environmental issues. In order to meet such demands, improvement in tire performance, specifically improvement in high fuel efficiency (reduction in rolling resistance), is also required, but it has been found that there is room for improvement in high fuel efficiency and wear resistance performance in the technique described in PTL 1.

Therefore, PTL 2 discloses a rubber composition which includes an emulsion-polymerized styrene-butadiene rubber and a solution-polymerized styrene-butadiene rubber, both having a glass transition temperature Tg of - 25°C or higher, and a polymer having a low Tg, and further includes a filler and a certain hydrocarbonoxy silane compound, in order to achieve both wet grip performance and rolling resistance of the tire.

### CITATION LIST

### Patent Literature

PTL 1: WO 2015/079703 A1
PTL 2: WO 2017/188139 A1

### SUMMARY

### (Technical Problem)

However, in the technique described in the above PTL 2, although achieving both wet grip performance and rolling resistance of the tire is possible to some extent, there has been a problem in that the rubber composition containing a hydrocarbonoxy silane compound having a thiol group or the like readily undergoes appearance changes such as black glossiness over time.

Therefore, the present disclosure is directed to solving the problem of the above conventional art and providing a rubber composition for tires that can highly balance the wet grip performance, high fuel efficiency, and wear resistance performance of a tire, and achieve an excellent discoloration resistance, and to provide a tread rubber made of such a rubber composition.

In addition, the present disclosure to directed to providing a tire that highly balances the wet grip performance, high fuel efficiency, and wear resistance performance, and has excellent discoloration resistance.

### (Solution to Problem)

However, in the technique described in the above PTL 2, although achieving both wet grip performance and rolling resistance of the tire is possible to some extent, there has been a problem in that the rubber composition containing a hydrocarbonoxy silane compound having a thiol group or the like readily undergoes appearance changes such as black glossiness over time.

Therefore, the present disclosure is directed to solving the problem of the above conventional art and providing a rubber composition for tires that can highly balance the wet grip performance, high fuel efficiency, and wear resistance performance of a tire, and achieve an excellent discoloration resistance, and to provide a tread rubber made of such a rubber composition.

In addition, the present disclosure to directed to providing a tire that highly balances the wet grip performance, high fuel efficiency, and wear resistance performance, and has excellent discoloration resistance.

### (Solution to Problem)

The main features of the present disclosure for solving the above problem are as follows.

The rubber composition of the present disclosure is a rubber composition comprising a rubber component, a filler, and a silane coupling agent,
wherein the rubber component contains a styrene-butadiene rubber (A) modified by a modifier having at least one atom selected from nitrogen, silicon, and tin and having a glass transition temperature of -50°C or lower, and an unmodified styrene-butadiene rubber (B) having a glass transition temperature at least 30°C higher than a glass transition temperature of the styrene-butadiene rubber (A),
the filler contains at least silica,
the silane coupling agent contains at least a silane coupling agent (A) having a thiol group and a silane coupling agent (B) having a sulfide bond,
a content of the silane coupling agent (A) is 1 to 10 parts by mass per 100 parts by mass of the silica, and
a total content of the silane coupling agent (A) and the silane coupling agent (B) is 1 to 15 parts by mass per 100 parts by mass of the silica.

Such a tread rubber of the present disclosure, when applied to a tire, is capable of highly balancing the wet grip performance, high fuel efficiency, and wear resistance performance, and achieving an excellent discoloration resistance.

Furthermore, the tread rubber of the present disclosure is made of the above-mentioned rubber composition for tires of the present disclosure. Such a tread rubber of the present disclosure, when applied to a tire, is capable of highly balancing the wet grip performance, high fuel efficiency, and wear resistance performance, and achieving an excellent discoloration resistance.

Furthermore, the tire of the present disclosure comprises the above-mentioned tread rubber of the present disclosure. Such a tire of the present disclosure is capable of highly balancing the wet grip performance, high fuel efficiency, and wear resistance performance, and achieving an excellent discoloration resistance.

### (Advantageous Effect)

According to the present disclosure, it is possible to provide a rubber composition for tires that is capable of highly balancing the wet grip performance, high fuel efficiency, and wear resistance performance of the tire, and achieving an excellent discoloration resistance, and a tread rubber made of such a rubber composition.

Furthermore, according to the present disclosure, it is possible to provide a tire that highly balances the wet grip performance, high fuel efficiency, and wear resistance performance, and has excellent discoloration resistance.

### DETAILED DESCRIPTION

A rubber composition for tires, a tread rubber, and a tire of the present disclosure are described below in detail with reference to embodiments thereof.

### <Definitions>

The compounds described in this specification may be partially or entirely derived from fossil resources, biological resources such as plant resources, or recycled resources such as used tires. Alternatively, they may be derived from a mixture of two or more of fossil resources, biological resources, and recycled resources.

### <Rubber Composition for Tires>

The rubber composition for tires of the present disclosure is a rubber composition containing a rubber component, a filler, and a silane coupling agent.

Hereinafter, each component constituting the rubber composition for tires of the present disclosure will be described.

### (Rubber Component)

The rubber component contains a styrene-butadiene rubber (A) modified by a modifier having at least one atom selected from nitrogen, silicon, and tin and having a glass transition temperature of -50°C or lower, and an unmodified styrene-butadiene rubber (B) having a glass transition temperature at least 30°C higher than the glass transition temperature of the styrene-butadiene rubber (A).

By including the styrene-butadiene rubber (A) and the styrene-butadiene rubber (B) in the rubber component, the wet grip performance when applied to a tire can be improved. In addition, in the present disclosure, by using the styrene-butadiene rubber (A) modified with a modifier having at least one atom selected from nitrogen, silicon, and tin as the rubber component, the dispersibility of the filler such as silica in the rubber composition can be improved. As a result, the rubber composition of the present disclosure has significantly improved low heat generation properties and improved dispersibility of the filler, thereby enabling improvement in physical properties such as reinforcing properties, and high fuel efficiency and wear resistance performance when applied to a tire.

The styrene-butadiene rubber (A) is a styrene-butadiene rubber modified by a modifier having at least one atom selected from nitrogen, silicon, and tin and having a glass transition temperature of -50°C or lower, as described above.

The styrene-butadiene rubber (A) has a glass transition temperature of -50°C or lower, preferably -55°C or lower, and preferably higher than -90°C. When the glass transition temperature of the styrene-butadiene rubber (A) is - 50°C or lower, the high fuel efficiency and wear resistance performance of the tire to which the rubber composition is applied can be sufficiently improved. Furthermore, a styrene-butadiene rubber with a glass transition temperature higher than -90°C is easier to synthesize.

It should be noted that the glass transition temperatures of the styrene-butadiene rubber (A) and the styrene-butadiene rubber (B) described later can be measured, for example, as follows.

A DSC curve is recorded using each styrene-butadiene rubber as a sample and with DSC250 manufactured by TA Instruments under a helium flow of 50 mL/min while the sample is heating from -100°C at 20°C/min, and the peak top (inflection point) of the DSC differential curve is taken as the glass transition temperature.

The content ratio of the styrene-butadiene rubber (A) in the rubber component is preferably 15 mass% or more and less than 85 mass%, more preferably 20 to 85 mass%, even more preferably 30 to 80 mass%, and still even more preferably 40 to 80 mass%. When the content ratio of the styrene-butadiene rubber (A) in the rubber component is 15 mass% or more and less than 85 mass%, the high fuel efficiency and wet grip performance of the tire to which the rubber composition for tires is applied can be further improved.

Additionally, the styrene-butadiene rubber (A) preferably has a bound styrene content of less than 15 mass%. The bound styrene content of the styrene-butadiene rubber (A) means the ratio of styrene units contained in the styrene-butadiene rubber. When the bound styrene content is less than 15 mass%, the glass transition temperature tends to be lower. From a similar viewpoint, the bound styrene content is more preferably 14 mass% or less, even more preferably 13 mass% or less, and still even more preferably 12 mass% or less. Moreover, from the viewpoint of wear resistance performance of the tire to which the rubber composition for tires of the present disclosure is applied, the bound styrene content is preferably 5 mass% or more, more preferably 7 mass% or more, and even more preferably 8 mass% or more.

The bound styrene content of the styrene-butadiene rubber (A) can be controlled by adjusting the amount of monomers used in the polymerization of the styrene-butadiene rubber, the degree of polymerization, and the like.

Additionally, as described above, the styrene-butadiene rubber (A) is modified by a modifier having at least one atom selected from nitrogen, silicon, and tin, and from the viewpoint of balancing, at a further higher level, the high fuel efficiency, wear resistance performance, and wet grip performance of the tire to which the rubber composition is applied, it is preferable that the rubber is modified by a modifier having a nitrogen atom and a silicon atom, and more preferably by a modifier having a functional group containing a nitrogen atom and an alkoxy group.

Here, the modifier having a functional group containing a nitrogen atom and an alkoxy group is a generic term for modifiers having at least one functional group containing a nitrogen atom and at least one alkoxy group.

The functional group containing a nitrogen atom is preferably selected from the following:
monovalent hydrocarbon groups containing 1 to 30 carbon atoms having a functional group selected from the group consisting of a primary amino group, a primary amino group protected with a hydrolyzable protective group, an onium salt residue of a primary amine, an isocyanate group, a thioisocyanate group, an imine group, an imine residue, an amide group, a secondary amino group protected with a hydrolyzable protective group, a cyclic secondary amino group, an onium salt residue of a cyclic secondary amine, a non-cyclic secondary amino group, an onium salt residue of a non-cyclic secondary amine, an isocyanuric acid triester residue, a cyclic tertiary amino group, a non-cyclic tertiary amino group, a nitrile group, a pyridine residue, an onium salt residue of a cyclic tertiary amine, and an onium salt residue of a non-cyclic tertiary amine, and including a straight chain, a branched chain, an alicyclic ring or an aromatic ring; or monovalent hydrocarbon groups containing 1 to 30 carbon atoms including a straight chain, a branched chain, an alicyclic ring that may include at least one heteroatom selected from an oxygen atom, sulfur atom, and phosphorus atom.

Furthermore, the styrene-butadiene rubber (A) is preferably modified with an aminoalkoxysilane compound, and from the perspective of having high affinity with the filler, such as silica, the styrene-butadiene rubber is more preferably modified at a terminal end with an aminoalkoxysilane compound. When the styrene-butadiene rubber is modified with an aminoalkoxysilane compound at a terminal end, the interaction between the styrene-butadiene rubber (A) and the filler (particularly silica) becomes particularly strong.

The modification site of the styrene-butadiene rubber (A) may be a molecular terminal as described above, or may be the main chain.

The styrene-butadiene rubber (A) with modified molecular terminals can be produced, for example, by reacting various modifying agents with a terminal of a styrene-butadiene copolymer having an active terminal, according to the method disclosed in WO 2003/046020 A1 and JP 2007-217562 A.

In one preferred embodiment, the styrene-butadiene rubber (A) with a modified molecular terminal can be produced by first reacting an aminoalkoxysilane compound with a terminal of a styrene-butadiene copolymer having an active terminal with a cis-1,4 bond content of 75% or more, according to the method disclosed in WO 2003/046020 or JP 2007-217562, and then stabilizing the resulting compound by reacting it with a carboxylic acid partial ester of a polyhydric alcohol.

The carboxylic acid partial ester of a polyhydric alcohol refers to an ester of a polyhydric alcohol and a carboxylic acid, which has at least one hydroxyl group. Specifically, esters of saccharides or modified saccharides having four or more carbon atoms and fatty acids are preferably used. More preferably, these esters include: (1) fatty acid partial esters of polyhydric alcohols, particularly partial esters (monoesters, diesters, or triesters) of saturated or unsaturated higher fatty acids having 10 to 20 carbon atoms and polyhydric alcohols, and (2) ester compounds in which one to three partial esters of polycarboxylic acids and higher alcohols are bonded to a polyhydric alcohol.

As the polyhydric alcohols used as raw materials for partial esters, (hydrogenated or non-hydrogenated) saccharides with five or six carbon atoms having at least three hydroxyl groups, glycols, and polyhydroxy compounds are preferably used. As the raw material, fatty acids, saturated or unsaturated fatty acids having 10 to 20 carbon atoms are preferred, and stearic acid, lauric acid, or palmitic acid is used, for example.

Among the fatty acid partial esters of polyhydric alcohols, sorbitan fatty acid esters are preferred, and specific examples thereof include sorbitan monolaurate, sorbitan monopalmitate, sorbitan monostearate, sorbitan tristearate, sorbitan monooleate, and sorbitan trioleate.

The aminoalkoxysilane compound mentioned above is not particularly limited, but an aminoalkoxysilane compound represented by the following general formula (i) is preferred.

R¹¹ₐ-Si-(OR¹²)₄₋ₐ ... (i)

In the general formula (I), R¹¹ and R¹² each independently represent a monovalent aliphatic hydrocarbon group having 1 to 20 carbon atoms or a monovalent aromatic hydrocarbon group having 6 to 18 carbon atoms, at least one of R¹¹ and R¹² is substituted with an amino group, and "a" represents an integer from 0 to 2; when multiple OR¹² are present, each OR¹² may be the same or different; and the molecule does not include active protons.

As the aminoalkoxysilane compound, an aminoalkoxysilane compound represented by the following general formula (ii) is also preferred.

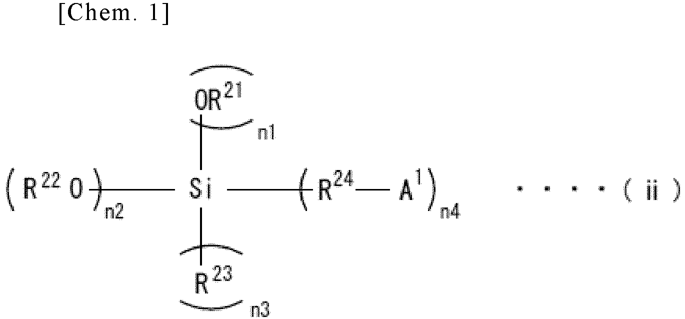

In the general formula (ii), n1 + n2 + n3 + n4 = 4, where n2 is an integer from 1 to 4, and n1, n3, and n4 are integers from 0 to 3.

A¹ is at least one functional group selected from the group consisting of a saturated cyclic tertiary amine compound residue, an unsaturated cyclic tertiary amine compound residue, a ketimine residue, a nitrile group, a (thio)isocyanate group, an isocyanuric acid trihydrocarbyl ester group, a nitrile group, a pyridine group, a (thio)ketone group, an amide group, and a primary or secondary amino group having a hydrolyzable group. When n4 is 2 or more, A¹ may be the same or different, and A¹ may be a divalent group that forms a cyclic structure by binding to Si.

R²¹ is a monovalent aliphatic or alicyclic hydrocarbon group having 1 to 20 carbon atoms or a monovalent aromatic hydrocarbon group having 6 to 18 carbon atoms, and when n1 is 2 or more, they may be the same or different.

R²² is a monovalent aliphatic or alicyclic hydrocarbon group having 1 to 20 carbon atoms or a monovalent aromatic hydrocarbon group having 6 to 18 carbon atoms, any of which may contain a nitrogen atom and/or a silicon atom. When n2 is 2 or more, R²² may be the same or different from each other, or they may be joined together to form a ring.

R²³ is a monovalent aliphatic or alicyclic hydrocarbon group having 1 to 20 carbon atoms, a monovalent aromatic hydrocarbon group having 6 to 18 carbon atoms, or a halogen atom, and when n3 is 2 or more, R²³ may be the same or different.

R²⁴ is a divalent aliphatic or alicyclic hydrocarbon group having 1 to 20 carbon atoms or a divalent aromatic hydrocarbon group having 6 to 18 carbon atoms, and when n4 is 2 or more, R²⁴ may be the same or different.

The hydrolyzable group in the primary or secondary amino group having the hydrolyzable group is preferably a trimethylsilyl group or a tert-butyldimethylsilyl group, with the trimethylsilyl group being particularly preferred.

The aminoalkoxysilane compound represented by the above general formula (ii) is preferably an aminoalkoxysilane compound represented by the following general formula (iii).

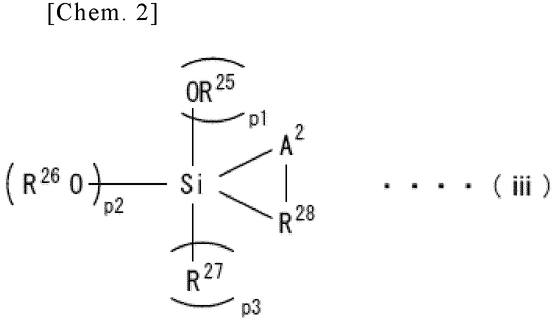

In the general formula (iii), p1 + p2 + p3 = 2, where p2 is an integer from 1 to 2, and p1 and p3 are integers from 0 to 1.

A² is NRa, where Ra is a monovalent hydrocarbon group, a hydrolyzable group, or a nitrogen-containing organic group.

R²⁵ is a monovalent aliphatic or alicyclic hydrocarbon group having 1 to 20 carbon atoms or a monovalent aromatic hydrocarbon group having 6 to 18 carbon atoms.

R²⁶ is a monovalent aliphatic or alicyclic hydrocarbon group having 1 to 20 carbon atoms, a monovalent aromatic hydrocarbon group having 6 to 18 carbon atoms, or a nitrogen-containing organic group, any of which may contain a nitrogen atom and/or a silicon atom. When p2 is 2, R²⁶ may be the same or different from each other, or they may be joined together to form a ring.

R²⁷ is a monovalent aliphatic or alicyclic hydrocarbon group having 1 to 20 carbon atoms, a monovalent aromatic hydrocarbon group having 6 to 18 carbon atoms, or a halogen atom.

R²⁸ is a divalent aliphatic or alicyclic hydrocarbon group having 1 to 20 carbon atoms or a divalent aromatic hydrocarbon group having 6 to 18 carbon atoms.

A trimethylsilyl group or tert-butyldimethylsilyl group is preferable as the hydrolyzable group, and a trimethylsilyl group is particularly preferable.

The aminoalkoxysilane compound represented by the above general formula (ii) is also preferably an aminoalkoxysilane compound represented by the following general formula (iv) or the following general formula (v).

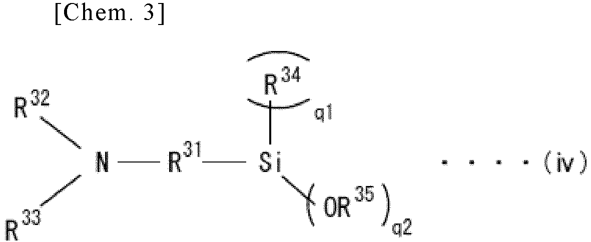

In the general formula (iv), q1 + q2 = 3, where q1 is an integer from 0 to 2, and q2 is an integer from 1 to 3.

R³¹ is a divalent aliphatic or alicyclic hydrocarbon group having 1 to 20 carbon atoms or a divalent aromatic hydrocarbon group having 6 to 18 carbon atoms.

R³² and R³³ are each independently a hydrolyzable group, a monovalent aliphatic or alicyclic hydrocarbon group having 1 to 20 carbon atoms, or a monovalent aromatic hydrocarbon group having 6 to 18 carbon atoms.

R³⁴ is a monovalent aliphatic or alicyclic hydrocarbon group having 1 to 20 carbon atoms or a monovalent aromatic hydrocarbon group having 6 to 18 carbon atoms, and when q1 is 2, R³⁴ may be the same or different.

R³⁵ is a monovalent aliphatic or alicyclic hydrocarbon group having 1 to 20 carbon atoms or a monovalent aromatic hydrocarbon group having 6 to 18 carbon atoms, and when q2 is 2 or more, R³⁵ may be the same or different.

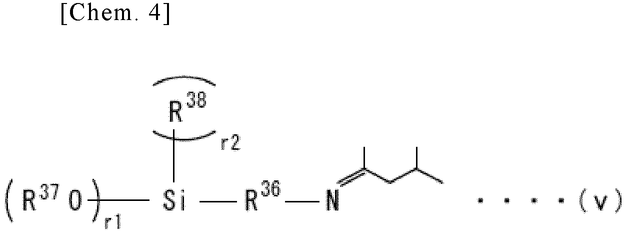

In the general formula (v), r1 + r2 = 3, where r1 is an integer from 1 to 3, and r2 is an integer from 0 to 2.

R³⁶ is a divalent aliphatic or alicyclic hydrocarbon group having 1 to 20 carbon atoms or a divalent aromatic hydrocarbon group having 6 to 18 carbon atoms.

R³⁷ is a dimethylaminomethyl group, a dimethylaminoethyl group, a diethylaminomethyl group, a diethylaminoethyl group, a methylsilyl (methyl) aminomethyl group, a methylsilyl (methyl) aminoethyl group, a methylsilyl (ethyl) aminomethyl group, a methylsilyl (ethyl) aminoethyl group, a dimethylsilyl aminomethyl group, a dimethylsilyl aminoethyl group, a monovalent aliphatic or alicyclic hydrocarbon group having 1 to 20 carbon atoms, or a monovalent aromatic hydrocarbon group having 6 to 18 carbon atoms, and when r1 is 2 or more, R³⁷ may be the same or different.

R³⁸ is a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms, and when r2 is 2, R³⁸ may be the same or different.

A specific example of the aminoalkoxysilane compound represented by general formula (v) includes N-(1,3-dimethylbutylidene)-3-triethoxysilyl-1-propanamine.

The aminoalkoxysilane compound represented by the above general formula (ii) is also preferably an aminoalkoxysilane compound represented by the following general formula (vi) or the following general formula (vii).

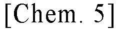

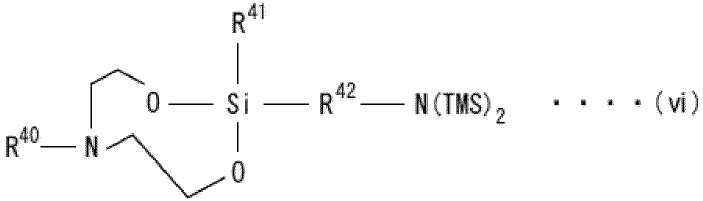

In the general formula (vi), R⁴⁰ is a trimethylsilyl group, a monovalent aliphatic or alicyclic hydrocarbon group having 1 to 20 carbon atoms, or a monovalent aromatic hydrocarbon group having 6 to 18 carbon atoms.

R⁴¹ is a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms.

R⁴² is a divalent aliphatic or alicyclic hydrocarbon group having 1 to 20 carbon atoms or a divalent aromatic hydrocarbon group having 6 to 18 carbon atoms.

Here, TMS indicates a trimethylsilyl group (the same holds below).

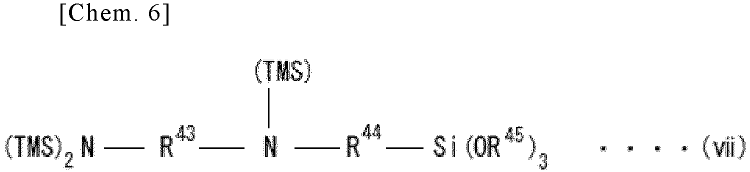

In the general formula (vii), R⁴³ and R⁴⁴ are each independently a divalent aliphatic or alicyclic hydrocarbon group having 1 to 20 carbon atoms or a divalent aromatic hydrocarbon group having 6 to 18 carbon atoms.

R⁴⁵ is a monovalent aliphatic or alicyclic hydrocarbon group having 1 to 20 carbon atoms or a monovalent aromatic hydrocarbon group having 6 to 18 carbon atoms, and each R⁴⁵ may be the same or different.

The aminoalkoxysilane compound represented by the above general formula (ii) is also preferably an aminoalkoxysilane compound represented by the following general formula (viii) or the following general formula (ix).

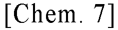

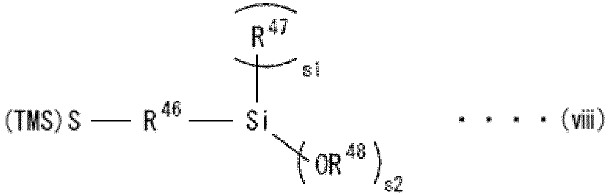

In the general formula (viii), s1 + s2 = 3, where s1 is an integer from 0 to 2, and s2 is an integer from 1 to 3.

R⁴⁶ is a divalent aliphatic or alicyclic hydrocarbon group having 1 to 20 carbon atoms or a divalent aromatic hydrocarbon group having 6 to 18 carbon atoms.

R⁴⁷ and R⁴⁸ are each independently a monovalent aliphatic or alicyclic hydrocarbon group having 1 to 20 carbon atoms or a monovalent aromatic hydrocarbon group having 6 to 18 carbon atoms. If multiple R⁴⁷ or R⁴⁸ are each present, they may be the same or different.

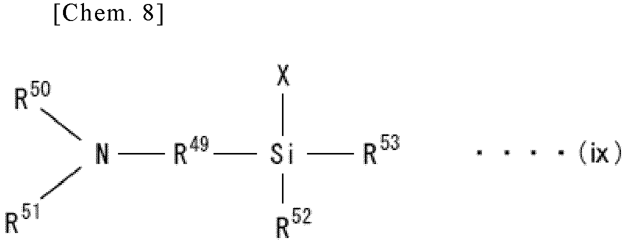

In the general formula (ix), X is a halogen atom.

R⁴⁹ is a divalent aliphatic or alicyclic hydrocarbon group having 1 to 20 carbon atoms or a divalent aromatic hydrocarbon group having 6 to 18 carbon atoms.

R⁵⁰ and R⁵¹ are each independently a hydrolyzable group, a monovalent aliphatic or alicyclic hydrocarbon group having 1 to 20 carbon atoms, or a monovalent aromatic hydrocarbon group having 6 to 18 carbon atoms, or R⁵⁰ and R⁵¹ are bonded together to form a divalent organic group.

R⁵² and R⁵³ are each independently a halogen atom, a hydrocarbyloxy group, a monovalent aliphatic or alicyclic hydrocarbon group having 1 to 20 carbon atoms, or a monovalent aromatic hydrocarbon group having 6 to 18 carbon atoms.

A hydrolyzable group is preferable as R⁵⁰ and R⁵¹, and a trimethylsilyl group or tert-butyldimethylsilyl group is preferable as the hydrolyzable group, with a trimethylsilyl group being particularly preferable.

The aminoalkoxysilane compound represented by the above general formula (ii) is also preferably an aminoalkoxysilane compound represented by the following general formula (x), the following general formula (xi), the following general formula (xii), or the following general formula (xiii).

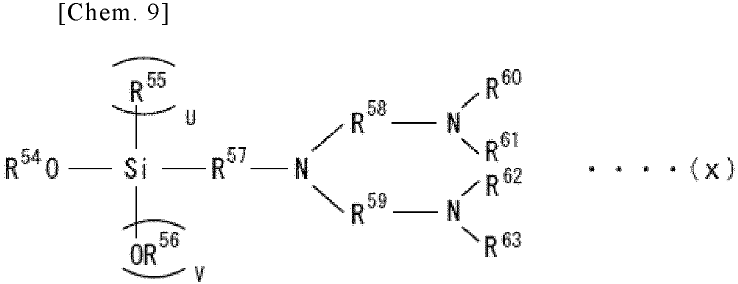

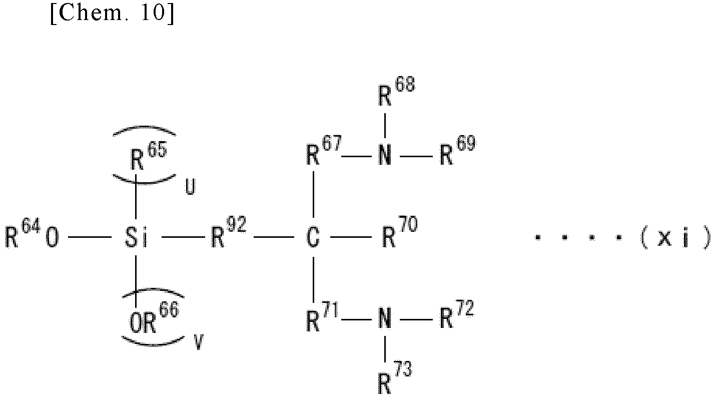

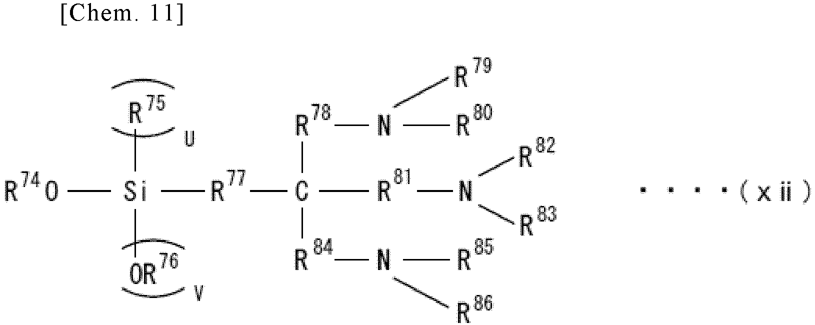

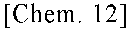

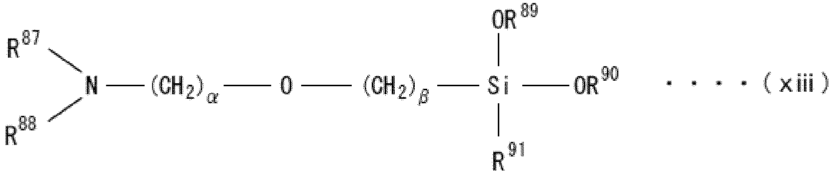

In the general formulas (x) to (xiii), the symbols U and V each represent integers from 0 to 2 and satisfy the relationship U + V = 2.

R^{54_92} in the general formulas (x) to (xiii) may be the same or different, and each represents a monovalent or divalent aliphatic or alicyclic hydrocarbon group having 1 to 20 carbon atoms or a monovalent or divalent aromatic hydrocarbon group having 6 to 18 carbon atoms.

In the general formula (xiii), α and β represent integers from 0 to 5.

Among the compounds satisfying general formula (x), general formula (xi), and general formula (xii), N1,N1,N7,N7-tetramethyl-4-((trimethoxysilyl)methyl)heptane-1,7-diamine, 2-((hexyl-dimethoxysilyl)methyl)-N1,N1,N3,N3-2-pentamethylpropane-1,3-diamine, N1-(3-(dimethylamino)propyl)-N3,N3-dimethyl-N1-(3-(trimethoxysilyl)propyl)propane-1,3-diamine, and 4-(3-(dimethylamino)propyl)-N1,N1,N7,N7-tetramethyl-4-((trimethoxysilyl)methyl)heptane-1,7-diamine are particularly preferred.

Furthermore, among the compounds satisfying general formula (xiii), N,N-dimethyl-2-(3-(dimethoxymethylsilyl)propoxy)ethanamine, N,N-bis(trimethylsilyl)-2-(3-(trimethoxysilyl)propoxy)ethanamine, N,N-dimethyl-2-(3-(trimethoxysilyl)propoxy)ethanamine, and N,N-dimethyl-3-(3-(trimethoxysilyl)propoxy)propan-1-amine are particularly preferred.

In addition, in the present disclosure, a production method of the styrene-butadiene rubber (A) using a modifier containing an aminoalkoxysilane compound represented by the above general formula (i) can be provided.

The production method of the styrene-butadiene rubber (A) may specifically include 1) a step of polymerizing a styrene-butadiene rubber in a hydrocarbon solvent in the presence of an organic alkali metal compound to produce an active polymer having an alkali metal bonded to at least one terminal, and 2) a step of reacting the active polymer with a modifier containing the aminoalkoxysilane compound represented by the above general formula (i).

The step 1) is a step for producing an active polymer having an alkali metal bonded to at least one terminal, and can be carried out by polymerizing a styrene-based monomer and a butadiene-based monomer in a hydrocarbon solvent in the presence of an organic alkali metal compound.

It should be noted that the hydrocarbon solvent is not particularly limited, but for example, one or more selected from the group consisting of n-pentane, n-hexane, n-heptane, iso-octane, cyclohexane, toluene, benzene, and xylene can be used.

The organic alkali metal compound can be used in an amount of 0.1 mmol to 1.0 mmol based on 100 g of the total monomers.

The organic alkali metal compound is not particularly limited, but for example, one or more selected from the group consisting of methyllithium, ethyllithium, propyllithium, n-butyllithium, s-butyllithium, t-butyllithium, hexyllithium, n-decyllithium, t-octyllithium, phenyllithium, 1-naphthylium, n-eicosyllithium, 4-butylphenyllithium, 4-tolyllithium, cyclohexyllithium, 3,5-di-n-heptylcyclohexyllithium, 4-cyclopentyllithium, naphthyl sodium, naphthyl potassium, lithium alkoxide, sodium alkoxide, potassium alkoxide, lithium sulfonate, sodium sulfonate, potassium sulfonate, lithium amide, sodium amide, potassium amide, and lithium isopropylamide can be used.

The polymerization in the above step (1) may be carried out by further adding a polar additive as necessary, and the polar additive can be added in an amount of 0.001 parts by weight to 1.0 parts by weight per 100 parts by weight of the total monomers. The polar additive can be added in an amount of specifically 0.005 parts by weight to 0.5 parts by weight, more specifically 0.01 parts by weight to 0.3 parts by weight, per 100 parts by weight of the total monomers.

As the polar additive, for example, one or more selected from the group consisting of tetrahydrofuran, ditetrahydrofurylpropane, diethyl ether, cycloamyl ether, dipropyl ether, ethylene dimethyl ether, ethylene dimethyl ether, diethylene glycol, dimethyl ether, tertiary butoxyethoxyethane, bis(3-dimethylaminoethyl) ether, (dimethylaminoethyl) ethyl ether, trimethylamine, triethylamine, tripropylamine, and tetramethylethylenediamine can be used.

In the above-described production method, when a conjugated diene monomer and an aromatic vinyl monomer are copolymerized using the above-mentioned polar additive, it is possible to induce the formation of a random copolymer by compensating for the difference in their reaction rates.

Furthermore, the polymerization in the step (1) may be carried out via adiabatic polymerization or via isothermal polymerization.

Here, the adiabatic polymerization refers to a polymerization method that includes a step of polymerization by self-reaction heat without applying heat after adding the organic alkali metal compound, and the isothermal polymerization refers to a polymerization method in which the temperature of the polymer is maintained constant by arbitrarily adding or removing heat after adding the organic alkali metal compound.

Furthermore, the polymerization may be carried out in a temperature range of 20°C to 200°C, specifically 0°C to 150°C, and more specifically in a temperature range of 10°C to 120°C.

Additionally, the above step (2) is a modification reaction step in which the active polymer and a modifier containing an aminoalkoxysilane compound represented by the above general formula (i) are reacted to produce the styrene-butadiene rubber (A).

At this time, the modifier containing the compound represented by the formula (1) may be the same as those described above. The aminoalkoxysilane compound represented by the above general formula (i) can be used in a ratio of 0.1 to 2.0 mol per 1 mol of the organic alkali metal compound.

Furthermore, the reaction in the above step (2) is a modification reaction for introducing a functional group into the polymer, and the respective reactions can be carried out at a temperature range of 0°C to 90°C for 1 minute to 5 hours.

It should be noted that the above manufacturing method may further include one or more steps of solvent and unreacted monomer recovery and drying, after the step (2), as necessary.

Moreover, the content ratio of the styrene-butadiene rubber (A) modified by the modifier containing an aminoalkoxysilane compound represented by the above general formula (i) in the rubber component is not particularly limited, but is preferably 15 mass% or more, more preferably 20 mass% or more, preferably 60 mass% or less, and more preferably 50 mass% or less. When the content ratio of the styrene-butadiene rubber (A) in the rubber component is 15 mass% or more, the high fuel efficiency and wear resistance performance of the tire when the rubber composition is applied to a tire can be further improved. On the other hand, when the content ratio of the styrene-butadiene rubber (A) in the rubber component is 60 mass% or less, the styrene-butadiene rubber (B) described later can be contained in a sufficient amount, and the wet grip performance when the rubber composition is applied to a tire can be favorably maintained.

The rubber component further contains, an unmodified styrene-butadiene rubber (B) having a glass transition temperature at least 30°C higher than the glass transition temperature of the styrene-butadiene rubber (A), in addition to the styrene-butadiene rubber (A).

By including the styrene-butadiene rubber (B) having a high glass transition temperature as the rubber component, the wet grip performance when the rubber composition for tires is applied to a tire can be enhanced.

Here, the styrene-butadiene rubber (B) is required to have a glass transition temperature at least 30°C, preferably at least 35°C higher than the glass transition temperature of the styrene-butadiene rubber (A). This can increase the flexibility of the rubber, and can sufficiently improve the high fuel efficiency and wear resistance performance of the tire to which the rubber composition is applied.

Additionally, the content ratio of the styrene-butadiene rubber (B) in the rubber component is not particularly limited, but is preferably 15 mass% or more, more preferably 20 mass% or more, and preferably less than 85 mass%, more preferably 80 mass% or less. When the content ratio of the styrene-butadiene rubber (B) in the rubber component is 15 mass% or more, the wet grip performance when the rubber composition is applied to a tire can be further improved. On the other hand, when the content ratio of the styrene-butadiene rubber (B) in the rubber component is less than 85 mass%, the high fuel efficiency and wear resistance performance when the rubber composition is applied to a tire can be favorably maintained.

Furthermore, from the viewpoint of balancing the wet grip performance, high fuel efficiency, and wear resistance performance at a higher level when the rubber composition is applied to a tire, it is preferable that the content ratio of the styrene-butadiene rubber (B) is greater than the content ratio of the styrene-butadiene rubber (A) (content ratio of the styrene-butadiene rubber (B) / content ratio of the styrene-butadiene rubber (A) > 1).

The rubber component may also include, a rubber (other rubber) different from the styrene-butadiene rubber (A) and the styrene-butadiene rubber (B), for the purpose of improving the high fuel efficiency, wear resistance performance, and the like when the rubber composition is applied to a tire.

The other rubber can be appropriately selected depending on the required performance, and for example, one or more of diene rubbers such as natural rubber (NR), polybutadiene (BR), polyisoprene (IR), ethylenepropylene copolymer rubber, and non-diene rubbers such as butyl rubber can be used.

However, from the viewpoint of balancing the wet grip performance, high fuel efficiency, and wear resistance performance at a higher level when the rubber composition of the present disclosure is applied to a tire, it is preferable that the rubber component consists only of the styrene-butadiene rubber (A) and the styrene-butadiene rubber (B).

### (Filler)

The rubber composition for tires of the present disclosure includes a filler containing at least silica, in addition to the rubber component described above.

By using the filler together with the rubber component containing the styrene-butadiene rubber (A), the dispersibility of the filler is improved, and a high fuel efficiency and wear resistance performance when the rubber composition is applied to a tire can be achieved.

Here, the content of the filler is not particularly limited, but is preferably 20 parts by mass or more, more preferably 30 parts by mass or more, even more preferably 30 parts by mass or more, and preferably 150 parts by mass or less, more preferably 140 parts by mass or less, and even more preferably 120 parts by mass or less, per 100 parts by mass of the rubber component. By optimizing the amount of the filler, the wet grip performance, high fuel efficiency, and wear resistance performance can be balanced at a higher level. When the filler content is 20 parts by mass or more, a sufficient wet grip performance, high fuel efficiency, and wear resistance performance can be obtained, and when the content is 160 parts by mass or less, degradation of low heat generation and processability can be suppressed.

The silica contained in the filler is not particularly limited and can be appropriately selected depending on the required performance. For example, wet silica (hydrous silicate), dry silica (anhydrous silicate), calcium silicate, or aluminum silicate can be used. Among these, wet silica is preferable. One kind of these silica may be used alone, or two or more kinds may be used in combination.

Moreover, precipitated silica may be used as the wet silica. As used herein, the term "precipitated silica" refers to silica that is obtained by, during the early part of the production process, allowing a reaction solution to react in a relatively high temperature and in a neutral to alkaline pH range to grow silica primary particles, and then controlling the solution to an acidic side so as to cause agglomeration of the primary particles.

From the viewpoint of reducing environmental impact, silica derived from plant-based silicates is also preferable as the silica. Examples of such siliceous plants include mosses, ferns, horsetails, Cucurbitaceae plants, Urticaceae plants, and Poaceae plants, for example. Among these plants, Poaceae plants are preferable. Examples of the Poaceae plants include rice, bamboo, and sugarcane, with rice being the most preferred. Since rice is widely cultivated for food, it can be locally sourced in many regions. Additionally, rice husks are produced in large quantities as industrial waste, making them easily available in large quantities. Therefore, from the perspective of availability, silica derived from rice husks (hereinafter referred to as "rice husk silica") is particularly preferred as the silica. The utilization of rice husk silica is environmentally preferable in various aspects because it allows for the effective utilization of rice husks, which would otherwise be industrial waste, while also reducing transportation and storage energy and costs.

It should be noted that the rice husk silica may be in the form of a powder of rice husk charcoal obtained by heating and carbonizing rice husks or precipitated silica produced by extracting rice husk ash with alkali, where the ash is generated when rice husks are burned as fuel in biomass boilers. The method of producing rice husk charcoal is not particularly limited, and various known methods can be used. For example, rice husks can be pyrolyzed by steam roasting in a kiln to obtain rice husk charcoal. The thus-obtained rice husk charcoal can then be ground using a known pulverizer (e.g., a ball mill) and classified into a specified particle size range to obtain rice husk charcoal powder. The precipitated silica derived from rice husks can be produced by methods such as the one described in JP 2019-38728 A.

Furthermore, the CTAB (cetyltrimethylammonium bromide) specific surface area of the silica is preferably 50 m²/g to 350 m²/g. When the CTAB specific surface area of the silica is 50 m²/g or more, the wear resistance is further improved, and when the CTAB specific surface area of the silica is 350 m²/g or less, the rolling resistance becomes lower.

Furthermore, the nitrogen adsorption specific surface area (BET method) of the silica is preferably 80 m²/g or more and less than 330 m²/g. When the nitrogen adsorption specific surface area (BET method) of the silica is 80 m²/g or more, the tire to which the rubber composition is applied can be sufficiently reinforced, and the high fuel efficiency of the tire can be further improved. Additionally, when the nitrogen adsorption specific surface area (BET method) of the silica is less than 330 m²/g, the elastic modulus of the rubber composition does not become excessively high, and the wet grip performance of the tire to which the rubber composition is applied is further improved. From the viewpoint of further lowering the rolling resistance and improving the wear resistance performance of the tire, the nitrogen adsorption specific surface area (BET method) of the silica is preferably 130 m²/g or more, preferably 150 m²/g or more, preferably 170 m²/g or more, preferably 180 m²/g or more, preferably 190 m²/g or more, and more preferably 195 m²/g or more. Additionally, from the viewpoint of further improving the wet grip performance of the tire, the nitrogen adsorption specific surface area (BET method) of the silica is preferably 300 m²/g or less, more preferably 280 m²/g or less, and even more preferably 270 m²/g or less.

Moreover, the content of the silica is preferably 20 parts by mass or more and less than 100 parts by mass per 100 parts by mass of the rubber component.

By optimizing the amount of the silica, the wet grip performance, high fuel efficiency, and wear resistance performance can be balanced at a high level, and when the content of the silica is 20 parts by mass or more, sufficient wet grip performance, high fuel efficiency, and wear resistance performance can be obtained, and when the content of the silica is less than 100 parts by mass, degradation of the low heat generation property and processability can be suppressed.

From a similar viewpoint, the content of the silica is more preferably 40 parts by mass or more, more preferably 50 parts by mass or more, even more preferably 62 parts by mass or more, still more preferably 65 parts by mass or more, and particularly preferably 68 parts by mass or more per 100 parts by mass of the rubber component. In addition, the content of the silica is more preferably 90 parts by mass or less, even more preferably 85 parts by mass or less, and particularly preferably 82 parts by mass or less per 100 parts by mass of the rubber component.

Furthermore, the filler preferably contains carbon black in addition to the silica. The carbon black can reinforce the rubber composition and improve the wear resistance performance of the rubber composition.

Carbon black is not particularly limited. Examples include GPF, FEF, HAF, ISAF, and SAF-grade carbon blacks, for example. These carbon blacks may be used alone or in combination of two or more types. Furthermore, the carbon black may be recycled carbon black.

In this specification, "recycled carbon black" refers to carbon black obtained by recovering carbon black from waste materials subjected to recycling. Examples of such waste materials subjected to recycling include rubber products containing carbon black, particularly vulcanized rubber products, represented by used rubber and used tires, as well as waste oil. Recycled carbon black differs from carbon black produced directly from hydrocarbons such as petroleum or natural gas, that is, carbon black that is not recycled. It should be noted that "used" in this context includes not only materials that were discarded after actual use, but also materials that were manufactured but discarded without actual use.

In the filler, the content ratio of silica in the total amount of silica and carbon black is preferably 80 mass% or more and less than 100 mass%, more preferably 85 mass% or more and less than 100 mass%, and even more preferably 90 mass% or more and less than 100 mass%. When the ratio of silica in the total amount of silica and carbon black is 80 mass% or more, it is possible to suppress degradation of the high fuel efficiency due to the increase of carbon black, and when the ratio is less than 100 mass%, the reinforcing effect of carbon black can be reliably ensured.

The filler may contain, in addition to silica and carbon black, another inorganic compound represented by the following formula (I), for example.

nM·xSiO_{Y}·zH₂O _{...} (I)

where M is at least one selected from metals selected from the group consisting of Al, Mg, Ti, Ca, and Zr, oxides or hydroxides of these metals, hydrates thereof, and carbonates of these metals, and n, x, y, and z are an integer of 1 to 5, an integer of 0 to 10, an integer of 2 to 5, and an integer of 0 to 10, respectively.

Additionally, when the filler contains another inorganic compound, the content thereof is preferably about 5 to 30 parts by mass per 100 parts by mass of the rubber component.

Examples of the inorganic compound of the above formula (I) include: alumina (Al₂O₃) such as γ-alumina and α-alumina; alumina monohydrate (Al₂O₃·H₂O) such as boehmite and diaspore; aluminum hydroxide [Al(OH)₃] such as gibbsite and bayerite; and aluminum carbonate [Al₂(CO₃)₃], magnesium hydroxide [Mg(OH)₂], magnesium oxide (MgO), magnesium carbonate (MgCO₃), talc (3MgO·4SiO₂·H₂O), attapulgite (5MgO·8SiO₂·9H₂O), titanium white (TiO₂), titanium black (TiO₂ₙ₋₁), calcium oxide (CaO), calcium hydroxide [Ca(OH)₂], aluminum magnesium oxide (MgO·Al₂O₃), clay (Al₂O₃·2SiO₂), kaolin (Al₂O₃·2SiO₂·2H₂O), pyrophyllite (Al₂O₃·4SiO₂·H₂O), bentonite (Al₂O₃·4SiO₂·2H₂O), aluminum silicate (Al₂SiO₅, Al₄·3SiO₄·5H₂O, etc.), magnesium silicate (Mg₂SiO₄, MgSiO₃, etc.), calcium silicate (Ca₂SiO₄, etc.), aluminum calcium silicate (Al₂O₃·CaO·2SiO₂, etc.), magnesium calcium silicate (CaMgSiO₄), calcium carbonate (CaCO₃), zirconium oxide (ZrO₂), zirconium hydroxide [ZrO(OH)₂·nH₂O], zirconium carbonate [Zr(CO₃)₂], and crystalline aluminosilicate containing hydrogen, alkali metal, or alkaline earth metal that corrects electric charge like various zeolites.

### (Silane Coupling Agent)

The rubber composition for tires of the present disclosure further contains a silane coupling agent, in addition to the rubber component and the filler.

By including the silane coupling agent, the dispersibility of the silica contained as the filler is enhanced, contributing to the balance of the wet grip performance, high fuel efficiency, and wear resistance performance.

In the present disclosure, the silane coupling agent contains at least a silane coupling agent (A) having a thiol group and a silane coupling agent (B) having a sulfide bond.

Although the silane coupling agent (A) having a thiol group has a high effect of improving the dispersibility of the above-mentioned silica, if the content is high, it may cause discoloration such as black gloss on the tire over time. Therefore, by further including the silane coupling agent (B) having a sulfide bond as the silane coupling agent and adjusting the contents of these silane coupling agents, it is possible to balance the wet grip performance, high fuel efficiency, and wear resistance performance while suppressing discoloration such as black gloss (having excellent discoloration resistance).

Here, the total content of the silane coupling agent (A) and the silane coupling agent (B) is preferably 1 to 15 parts by mass per 100 parts by mass of the silica. When the total content of the silane coupling agents is 1 part by mass or more per 100 parts by mass of the silica, the wet grip performance, high fuel efficiency, and wear resistance performance can be sufficiently balanced, and when the total content of the silane coupling agents is 15 parts by mass or less per 100 parts by mass of the silica, the discoloration resistance can be sufficiently ensured.

From a similar viewpoint, the total content of the silane coupling agent (A) and the silane coupling agent (B) is preferably 2 to 14 parts by mass, more preferably 3 to 13 parts by mass, and even more preferably 5 to 12 parts by mass per 100 parts by mass of the silica.

Additionally, the content of the silane coupling agent (A) is 1 to 10 parts by mass per 100 parts by mass of the silica. When the content of the silane coupling agent (A) is 1 part by mass or more per 100 parts by mass of the silica, the wet grip performance, high fuel efficiency, and wear resistance performance can be sufficiently balanced, and when the content of the silane coupling agent (A) is 10 parts by mass or less per 100 parts by mass of the silica, the discoloration resistance can be sufficiently ensured.

From a similar viewpoint, the content of the silane coupling agent (A) is preferably 2 to 9.5 parts by mass, more preferably 3 to 9 parts by mass, per 100 parts by mass of the silica.

Furthermore, from the viewpoint of balancing the wet grip performance, high fuel efficiency, and wear resistance performance, as well as the effect of discoloration resistance, the mass ratio (B/A) of the content of the silane coupling agent (B) with respect to the content of the silane coupling agent (A) is preferably 0.3 or more and less than 3.0. When the mass ratio (B/A) of the silane coupling agents (A) and (B) is 0.3 or more, the effect of discoloration resistance can be more reliably obtained, and when the mass ratio (B/A) of the silane coupling agents (A) and (B) is less than 3.0, a more reliable balance of wet grip performance, high fuel efficiency, and wear resistance performance can be achieved.

From a similar viewpoint, the mass ratio (B/A) of the silane coupling agents (A) and (B) is preferably 0.31 or more and 3.0 or less, more preferably 0.32 or more and 2.9 or less.

The silane coupling agent (A) is not particularly limited as long as it has a thiol group.

Examples include 3-(trimethoxysilyl)-1-propanethiol, 3-(triethoxysilyl)-1-propanethiol, 3-(methyldimethoxysilyl)-1-propanethiol, 2-(trimethoxysilyl)-1-ethanethiol, 2-(triethoxysilyl)-1-ethanethiol, 2-(methyldimethoxysilyl)-1-ethanethiol, (trimethoxysilyl)methanethiol, (triethoxysilyl)methanethiol, (methyldimethoxysilyl)methanethiol, 3-[ethoxybis(3,6,9,12,15-pentaoxaoctacosan-1-yloxy)silyl]-1-propanethiol (i.e., trade name "Si363" manufactured by Evonik Degussa), and [C₁₃H₂₇O(CH₂CH₂O)₅]₂(CH₃CH₂O)Si(CH₂)₃SH.

Furthermore, among the above-described silane coupling agents, the silane coupling agent (A) preferably has 20 to 75 carbon atoms. This is because the wet grip performance, high fuel efficiency, and wear resistance performance can be more reliably balanced.

The silane coupling agent (B) is not particularly limited as long as it has a sulfide bond.

Examples include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyl tetrasulfide, 3-triethoxysilylpropylbenzothiazolyl tetrasulfide, 3-triethoxysilylpropyl methacrylate monosulfide, 3-trimethoxysilylpropyl methacrylate monosulfide, and bis(3-diethoxymethylsilylpropyl)tetrasulfide, for example.

Bioethanol can also be used as a raw material for the silane coupling agent. The bioethanol is produced mainly using saccharides and/or cellulose as biological resources, and cannot effectively utilize other biological resources such as proteins, lipids, and amino acids. Furthermore, saccharides compete with food, and excessive use of cellulose leads to deforestation. Therefore, it is preferable to use a plurality of kinds of bio-based monomer components or to use a combination of bio-based monomer components, recycled resource-based monomer components, and fossil resource-based monomer components, in accordance with the supply conditions of various biological resources, the supply conditions of recycled resources, the supply conditions of fossil resources, and market demands (for example, demand for biomass resources as food). As a result, without relying on a single type of biological resource, a wide range of biological resources, such as sugars, proteins, and lipids, as well as recycled resources, can be effectively utilized, and consideration for the environment can also be made according to the manufacturing conditions.

### (Resin)

The rubber composition for tires of the present disclosure preferably contains a resin.

By further including the resin, not only can the processability of the rubber composition for tires be improved, but also the wet grip performance when the rubber composition is used in a tire can be further enhanced.

The type of the resin is not limited. Examples of the resin include C₅-based resins, C₅-C₉-based resins, C₉-based resins, terpene-based resins, dicyclopentadiene-based resins, and terpene-aromatic compound-based resins, for example, and these resins can be used alone or in combination.

Examples of the C₅-based resins include aliphatic petroleum resins obtained by (co)polymerizing the C₅ fraction obtained by thermal cracking of naphtha in the petrochemical industry.

The C₅ fraction usually includes an olefinic hydrocarbon such as 1-pentene, 2-pentene, 2-methyl-1-butene, 2-methyl-2-butene, or 3-methyl-1-butene; a diolefinic hydrocarbon such as 2-methyl-1,3-butadiene, 1,2-pentadiene, 1,3-pentadiene, or 3-methyl-1,2-butadiene; or the like. A commercially available product can be used as the C₅-based resin.

The C₅-C₉-based resins refer to C₅-C₉-based synthetic petroleum resins. Examples of these C₅-C₉-based resins include solid polymers obtained by polymerizing a petroleum-derived C₅-C₁₁ fraction using a Friedel-Crafts catalyst such as AlCl₃ or BF₃. More specifically, examples include a copolymer having, as the main component, styrene, vinyltoluene, α-methylstyrene, indene, and the like.

As the C₅-C₉-based resin, a resin including a small amount of C₉ or higher components is preferable in terms of compatibility with the rubber component. Here, including "a small amount of C₉ or higher component" means that the amount of C₉ or higher component in the total amount of the resin is less than 50 mass%, preferably 40 mass% or less. A commercially available product can be used as the C₅-C₉-based resin, for example.

The "C₉-based resins" refer to C₉-based synthetic petroleum resins, such as a solid polymer obtained by polymerizing a C₉ fraction using a Friedel-Crafts catalyst such as AlCl₃ or BF₃, for example.

Examples of the C₉-based resin include copolymers including indene, α-methylstyrene, vinyltoluene, or the like as main components.

The terpene-based resin is a solid-state resin obtained by compounding turpentine, which is obtained simultaneously when obtaining rosin from pine trees, or a polymerizable component separated from the turpentine, and then polymerizing the turpentine or the polymerizable component using a Friedel-Crafts catalyst. Examples of the terpene-based resins include β-pinene resins and α-pinene resins. A typical example of the terpene-aromatic compound-based resin is a terpene-phenol resin. The terpene-phenol resins may be obtained through various methods including: causing terpenes and various phenols to react with each other using a catalyst for the Friedel-Crafts reaction, or further condensing the resultant with formalin. The terpene as raw material is not limited. the terpene is preferably monoterpene hydrocarbon such as α-pinene or limonene, more preferably contains α-pinene, and is particularly preferably α-pinene. The resin may contain styrene, etc., in the skeleton.

The dicyclopentadiene-based resin refers to, for example, resins obtained by polymerizing dicyclopentadiene using a Friedel-Crafts catalyst, such as AlCl₃ or BF₃, or the like.

Additionally, the resin is preferably at least partially hydrogenated. When the resin is at least partially hydrogenated, the hysteresis loss (tan δ) in a low temperature region can be improved, whereby the wet grip performance of a tire to which the rubber composition is applied is improved.

The resin that is at least partially hydrogenated refers to a resin obtained by the reductive hydrogenation of a resin.

The resin serving as the raw material for the resin that is hydrogenated may include, for example, a resin obtained by copolymerizing a C₅ fraction and dicyclopentadiene (DCPD) (C₅-DCPD-based resin).

Here, if the dicyclopentadiene-derived component accounts for 50 mass% or more of the total amount of the resin, the C₅-DCPD-based resin is classified as a dicyclopentadiene-based resin. If the dicyclopentadiene-derived component accounts for less than 50 mass% of the total amount of the resin, the C₅-DCPD-based resin is classified as a C₅-based resin. The same applies even if a small amount of a third component, etc., is included.

The resin preferably has a softening point higher than 110°C and a polystyrene-equivalent weight-average molecular weight of 200 to 1600 g/mol. By applying a resin composition containing such a resin to a tire, the wear resistance performance of the tire can be further improved.

When the softening point of the resin is higher than 110°C, a tire to which the rubber composition is applied can be sufficiently reinforced, further enhancing the wear resistance performance. From the perspective of the wear resistance performance of the tire, the softening point of the resin is more preferably 116°C or higher, more preferably 120°C or higher, even more preferably 123°C or higher, and further preferably 127°C or higher. From the perspective of processability, the softening point of the resin is preferably 160°C or lower, more preferably 150°C or lower, even more preferably 145°C or lower, further preferably 141°C or lower, and even further preferably 136°C or lower.

It should be noted that the polystyrene-equivalent weight-average molecular weight can be determined, for example, by measuring the average molecular weight under the following conditions using gel permeation chromatography (GPC) and calculating the polystyrene-equivalent weight-average molecular weight.
- Column temperature: 40°C
- Injection volume: 50 µL
- Carrier and flow rate: tetrahydrofuran at 0.6 mL/min
- Sample preparation: about 2.5 mg of the resin component is dissolved in 10 mL of tetrahydrofuran

In addition, the softening point of the resin component can be measured according to JIS-K2207-1996 (Ring and Ball Method), for example.

When the polystyrene-equivalent weight-average molecular weight is 200 g/mol or more, the resin is less likely to precipitate from the tire, and the effects of the resin can be sufficiently exhibited; and when it is 1600 g/mol or less, the resin readily becomes compatible with the rubber component.

From the viewpoint of suppressing the precipitation of the resin from the tire and suppressing degradation of the tire appearance, the polystyrene-equivalent weight-average molecular weight is preferably 500 g/mol or more, more preferably 550 g/mol or more, more preferably 600 g/mol or more, more preferably 650 g/mol or more, and even more preferably 700 g/mol or more. Additionally, from the viewpoint of increasing compatibility of the resin with the rubber component and further enhancing the effect of the resin, the polystyrene-equivalent weight-average molecular weight is preferably 1350 g/mol or less, more preferably 1330 g/mol or less, more preferably 1300 g/mol or less, more preferably 1200 g/mol or less, more preferably 1100 g/mol or less, more preferably 1000 g/mol or less, and even more preferably 950 g/mol or less.

The ratio (Ts_{HR}/Mw_{HR}) of the softening point (Ts_{HR}) of the resin (unit: °C) to the polystyrene-equivalent weight-average molecular weight (Mw_{HR}) (unit: g/mol) is preferably 0.07 or more, more preferably 0.083 or more, more preferably 0.095 or more, more preferably 0.104 or more, more preferably 0.125 or more, more preferably 0.135 or more, more preferably 0.14 or more, and even more preferably 0.141 or more. Additionally, the ratio (Ts_{HR}/Mw_{HR}) is preferably 0.25 or less, preferably 0.24 or less, preferably 0.23 or less, preferably 0.19 or less, more preferably 0.18 or less, and even more preferably 0.17 or less.

Furthermore, the content of the resin is preferably 1 to 50 parts by mass per 100 parts by mass of the rubber component. When the content of the resin in the rubber composition is 1 part by mass or more per 100 parts by mass of the rubber component, the effects of the resin are sufficiently exhibited. When the content is 50 parts by mass or less, the resin is less likely to precipitate from the tire, ensuring that the effects of the resin are fully exhibited. On the other hand, when the content of the resin exceeds 50 parts by mass per 100 parts by mass of the rubber component, the high fuel efficiency and wear resistance performance of the tire to which the rubber composition is applied degrade. The content of the resin in the rubber composition is preferably 5 parts by mass or more, more preferably 7 parts by mass or more, and even more preferably 9 parts by mass or more, per 100 parts by mass of the rubber component, from the viewpoint of further enhancing the effect of the resin. From the perspective of suppressing the precipitation of the resin from the tire and preventing degradation of the external appearance of the tire, the content of the resin in the rubber composition is preferably 45 parts by mass or less, more preferably 40 parts by mass or less, even more preferably 35 parts by mass or less, per 100 parts by mass of the rubber component.

### (Other Components)

In addition to the rubber component, filler, and resin component described above, the rubber composition for tires of the present disclosure may further contain, as needed, various components commonly used in the rubber industry, such as age resistor, wax, softener, processing aid, stearic acid, zinc oxide (zinc white), vulcanization accelerator, vulcanizing agent, etc., selected as appropriate, within a range not impairing the object of the present disclosure. Commercial products are suitable for use as these compounding agents.

Examples of the age resistors include N-(1,3-dimethylbutyl)-N'-phenyl-p-phenylenediamine (6C), 2,2,4-trimethyl-1,2-dihydroquinoline polymer (TMDQ), 6-ethoxy-2,2,4-trimethyl-1,2-dihydroquinoline (AW), and N,N'-diphenyl-p-phenylenediamine (DPPD). The content of the age registers is not particularly limited and is in the range of preferably 0.1 to 5 parts by mass, more preferably 5 to 4 parts by mass, per 100 parts by mass of the rubber component.

Examples of the wax include paraffin wax and microcrystalline wax, for example. The content of the waxes is not particularly limited and is in the range of preferably 0.1 to 5 parts by mass, more preferably 5 to 4 parts by mass, per 100 parts by mass of the rubber component.

The content of zinc oxide (zinc white) is not particularly limited, but is preferably 8 parts by mass or less, more preferably 6 parts by mass or less, and even more preferably less than 4 parts by mass per 100 parts by mass of the rubber component. When the content of zinc white is too high (exceeding 8 parts by mass), there is a risk that dispersion will be poor and fracture characteristics will degrade.

Examples of the vulcanization accelerators include sulfenamide vulcanization accelerators, guanidine vulcanization accelerators, thiazole vulcanization accelerators, thiuram vulcanization accelerators, and dithiocarbamate vulcanization accelerators. These vulcanization accelerators may be used alone, or two or more of these may be used in combination. The content of the vulcanization accelerators is not particularly limited and is preferably in the range of 0.1 to 5 parts by mass, more preferably in the range of 0.2 to 4 parts by mass, per 100 parts by mass of the rubber component.

Examples of the vulcanizing agent include sulfur. The content of the vulcanizing agent is preferably in the range of 0.1 to 10 parts by mass, more preferably in the range of 10 to 4 parts by mass, as sulfur, per 100 parts by mass of the rubber component.

### (Method of Manufacturing Rubber Composition for Tires)

The method of manufacturing the rubber composition for tires is not particularly limited, but the rubber composition can be manufactured, for example, by blending the rubber component, the filler, and the silane coupling agent mentioned above with various components selected as needed, and then kneading, warming, extruding, etc. Furthermore, the resulting rubber composition can be vulcanized to produce vulcanized rubber.

There are no particular limitations on the kneading conditions, and various conditions, such as the volume charged into the kneading apparatus, the rotor rotation speed, the ram pressure, the kneading temperature, the kneading time, and the type of the kneading apparatus, may be appropriately selected depending on the purpose. Examples of the kneading apparatus include Banbury mixers, intermixes, kneaders, rolls, and other apparatuses, that are generally used for kneading rubber compositions.

There are also no particular limitations on the conditions of warming, and various conditions such as warming temperature, warming time, and warming apparatus can be appropriately selected depending on the purpose. Examples of the warming apparatus include a warming roller machine and other apparatuses generally used for warming rubber compositions.

There are also no particular limitations on the conditions of extrusion, and various conditions such as extrusion time, extrusion speed, extrusion apparatus, and extrusion temperature can be appropriately selected depending on the purpose. Examples of the extrusion apparatus include an extruder and other apparatuses generally used for extruding rubber compositions. The extrusion temperature can be determined as appropriate.

There are no particular limitations on the apparatus, method, conditions, etc. for performing the vulcanization, which may be appropriately selected depending on the purpose. Examples of the apparatus for vulcanization include molding vulcanizers and other apparatuses generally used for vulcanizing rubber compositions. The conditions for vulcanization are such that the temperature is, for example, about 100 to 190°C.

### <Tread Rubber>

The tread rubber of the present disclosure is made of the above-described rubber composition for tires. Since such a tread rubber of the present disclosure is made of the above-described rubber composition for tires, when it is applied to a tire, it is possible to highly balance the wet grip performance, high fuel efficiency, and wear resistance performance of the tire, and to exhibit excellent discoloration resistance.

The tread rubber of the present disclosure may be applied to a new tire or may be applied to a retreaded tire.

### <Tire>

The tire of the present disclosure comprises the above-described tread rubber. Since the tire of the present disclosure comprises the above-described tread rubber, the wet grip performance, high fuel efficiency, and wear resistance performance are highly balanced, and excellent discoloration resistance is exhibited.

In accordance with the type of tire to be applied, the tire of the present disclosure may be obtained by first shaping a tire using an unvulcanized rubber composition and then vulcanizing the tire, or by first shaping a tire using semi-vulcanized rubber yielded by a preliminary vulcanization process and then fully vulcanizing the tire. The tire of the present disclosure is preferably a pneumatic tire. the pneumatic tire may be filled with ordinary air or air with an adjusted partial pressure of oxygen, or may also be filled with an inert gas such as nitrogen, argon, or helium.

### EXAMPLES

The present disclosure is described in more detail below with reference to Examples, by which the present disclosure is not intended to be limited in any way.

### <Examples and Comparative Examples>

The rubber compositions of the examples and comparative examples were prepared by compounding and kneading each component according to the formulation summarized in Table 1. It should be noted that the compounding amounts of the rubber components listed in Table 1 are values including the amount of oil extension and are expressed as integers rounded to the nearest whole number. The compounding amounts of the respective components are expressed in parts by mass per 100 parts by mass of the rubber component.

The resulting rubber compositions of the examples and comparative examples were vulcanized to obtain vulcanized rubber test specimens.

Note that "Low Tg modified SBR" in Table 1 was prepared under the following conditions.

### (Synthesis of Low Tg Modified SBR (*1))

In an 800 mL pressure-resistant glass vessel that had been dried and purged with nitrogen, a cyclohexane solution of 1,3-butadiene and a cyclohexane solution of styrene were added to yield 67.5 g of 1,3-butadiene and 7.5 g of styrene. Then, 0.6 mmol of 2,2-ditetrahydrofurylpropane was added, and 0.8 mmol of n-butyllithium was added. Subsequently, the mixture was polymerized for 1.5 hours at 50°C. Next, 0.72 mmol of N,N-bis(trimethylsilyl)-3-[diethoxy(methyl)silyl]propylamine was added as a modifying agent to the polymerization reaction system when the polymerization conversion ratio reached nearly 100%, and a denaturation reaction was carried out for 30 minutes at 50°C. Subsequently, the reaction was stopped by adding 2 mL of an isopropanol solution containing 5 mass% of 2,6-di-t-butyl-p-cresol (BHT), and the result was dried with a regular method to obtain a modified SBR.

A measurement of the microstructure of the obtained modified SBR indicated that the bound styrene content was 10 mass% and the glass transition temperature (Tg) was -65°C.

### <Evaluations>

The wet grip performance and high fuel efficiency of the obtained vulcanized rubber test specimens were evaluated using the following methods.

### (1) Wet Grip Performance

The loss tangent (tanδ) of the test specimens was measured using a rheometric measurement device (manufactured by Gabo Qualimeter Testanlagen GmbH) under the conditions of a temperature of -5°C, a strain of 1%, and a frequency of 15 Hz. The evaluation result was expressed as an index by taking the reciprocal of the tanδ of Comparative Example 1 as 100, and is listed in Tables 2 and 3. A higher index value indicates a higher tanδ, meaning better wet grip performance.

### (2) High Fuel Efficiency

The loss tangent (tanδ) of the test specimens was measured using a rheometric measurement device (manufactured by Gabo Qualimeter Testanlagen GmbH) under the conditions of a temperature of 50°C, a strain of 1%, and a frequency of 15 Hz, and the reciprocal of the measured value was calculated. The evaluation result was expressed as an index by taking the reciprocal of the tanδ of Comparative Example 1 as 100, and is listed in Tables 2 and 3. A larger index value indicates smaller tanδ, indicating more excellent fuel efficiency.

### (3) Wear Resistance Performance

Lambourn abrasion tester, manufactured by Ueshima Seisakusho Co., Ltd., was used. Sandpaper was attached to the grinding wheel, and the wear volume of the test specimen under a slip ratio of 15% at room temperature was measured according to JIS K 6264-2:2005. The evaluation result was indexed by the following formula with the reciprocal of the wear volume of Comparative Example 1 as 100, and the average value of the obtained indexes was calculated and listed in Table 1. A larger index value represents a smaller wear volume, which means that the sample is excellent in wear resistance performance. Wear resistance index = {(Wear volume of the test specimen of Comparative Example 1) / (wear volume of each test specimen)} × 100

### (4) Discoloration of Appearance

After the test specimens were stored under conditions of 40°C and an ozone atmosphere of 50 pphm for 7 days, the presence or absence of discoloration on the surface was visually checked. The evaluation was conducted according to the following criteria, and the evaluation results are listed in Table 1.
O: Black gloss was absent
x: Black gloss was present

**[Table 1]**

| | | Comp. Ex.1 | Comp. Ex.2 | Comp. Ex.3 | Comp. Ex.4 | Example 1 | Example 2 | Example 3 | Example 4 | Example 5 |
|---|---|---|---|---|---|---|---|---|---|---|
| Composition of ingredients | Low Tg modified SBR *1 | 40 | - | 40 | 40 | 40 | 60 | 40 | 40 | 40 |
| | Medium Tg modified SBR *2 | - | 40 | - | - | - | - | - | - | - |
| | High Tg non-denaturing SBR *3 | 82.5 | 82.5 | 82.5 | 82.5 | 82.5 | 55 | 82.5 | 82.5 | 82.5 |
| | Silica *4 | 74 | 74 | 74 | 74 | 74 | 74 | 74 | 74 | 74 |
| | CB *5 | 8 | 8 | 8 | 8 | 8 | 8 | 8 | 8 | 8 |
| | Inorganic Filler * 11 | 10.5 | 10.5 | 10.5 | 10.5 | 10.5 | 10.5 | 10.5 | 10.5 | 10.5 |
| | Silane coupling agent (A) *6 | - | 6.29 | 8.51 | 12 | 6.29 | 6.29 | 4.4 | 2.22 | 4.26 |
| | Silane coupling agent (B) *7 | 8.51 | 2.22 | - | 4.2 | 2.22 | 2.22 | 1.6 | 6.29 | 4.26 |
| | Oil *8 | 15 | 15 | 15 | 15 | 15 | 22.5 | 15 | 15 | 15 |
| | Hydrogenated C₅ resin *9 | 5.5 | 5.5 | 5.5 | 5.5 | 5.5 | 5.5 | 5.5 | 5.5 | 5.5 |
| | Other components *10 | 37.5 | 37.5 | 37.5 | 37.5 | 37.5 | 37.5 | 37.5 | 37.5 | 37.5 |
| Evaluation | Wet grip performance | 100 | 119 | 103 | 100 | 110 | 85 | 111 | 106 | 113 |
| | High fuel efficiency | 100 | 103 | 145 | 151 | 120 | 150 | 112 | 109 | 124 |
| | Wear resistance performance | 100 | 82 | 91 | 92 | 102 | 87 | 95 | 104 | 97 |
| | Discoloration of appearance | O | O | x | x | O | O | O | O | O |

| | | | | | | | | | | |
|---|---|---|---|---|---|---|---|---|---|---|
| * 1 Low Tg modified SBR: a modified SBR obtained by the synthesis of the above-described low Tg modified SBR, which corresponds to the styrene-butadiene rubber (A) *2 Medium Tg modified SBR: a styrene-butadiene rubber obtained using butyllithium as an initiator, having Tg of -38°C, of which terminals were modified with N-(1,3-dimethylbutylidene)-3-triethoxysilyl-1-propanamine *3 High Tg unmodified SBR: trade name "HP755B" manufactured by ENEOS Materials Corporation, with a glass transition temperature of -19°C, and including 37.5 parts by mass of oil per 100 parts by mass of SBR, which corresponds to the styrene-butadiene rubber (B) *4 Silica: trade name "Nipsil AQ" manufactured by Tosoh Silica Co., Ltd. *5 CB: trade name "#80" manufactured by Asahi Carbon Co., Ltd. *7 Silane coupling agent (A): mercapto-based silane coupling agent, trade name "Si363" manufactured by EVONIK *8 Silane coupling agent (B): sulfide-based silane coupling agent, trade name "S2.5" manufactured by EVONIK *8 Oil: trade name "Diana Process NH-70S" manufactured by Idemitsu Kosan Co., Ltd. *9 Hydrogenated C₅-based Resin: trade name "Impera^{®} E1780" manufactured by Eastman, with a softening point of 130°C and a weight-average molecular weight (Mw) of 909 g/mol *10 Other components: the total amount of stearic acid, wax, age resistor, zinc oxide, vulcanization accelerator, and sulfur * 11 Inorganic filler: "Higilite^{®}" manufactured by Showa Denko K.K. | | | | | | | | | | |

It can be seen from the results in Table 1 that the samples of the examples according to the present disclosure exhibited good results in all of the wet grip performance, high fuel efficiency, wear resistance, and discoloration of appearance, and each effect was highly balanced. On the other hand, in the samples of the comparative examples, at least one evaluation result was poor.

### INDUSTRIAL APPLICABILITY

According to the present disclosure, it is possible to provide a rubber composition for tires that is capable of highly balancing the wet grip performance, high fuel efficiency, and wear resistance performance of the tire, and achieving an excellent discoloration resistance, and a tread rubber made of such a rubber composition.

Furthermore, according to the present disclosure, it is possible to provide a tire that highly balances the wet grip performance, high fuel efficiency, and wear resistance performance, and has excellent discoloration resistance.

## Claims

1. A rubber composition comprising a rubber component, a filler, and a silane coupling agent,
wherein the rubber component contains a styrene-butadiene rubber (A) modified by a modifier having at least one atom selected from nitrogen, silicon, and tin and having a glass transition temperature of -50°C or lower, and an unmodified styrene-butadiene rubber (B) having a glass transition temperature at least 30°C higher than a glass transition temperature of the styrene-butadiene rubber (A),
the filler contains at least silica,
the silane coupling agent contains at least a silane coupling agent (A) having a thiol group and a silane coupling agent (B) having a sulfide bond,
a content of the silane coupling agent (A) is 1 to 10 parts by mass per 100 parts by mass of the silica, and
a total content of the silane coupling agent (A) and the silane coupling agent (B) is 1 to 15 parts by mass per 100 parts by mass of the silica.

2. The rubber composition for tires according to claim 1, wherein the styrene-butadiene rubber (A) is modified by a modifier having a nitrogen atom and a silicon atom.

3. The rubber composition for tires according to claim 2, wherein the modifier is modified with a modifier having a functional group containing a nitrogen atom and an alkoxy group.

4. The rubber composition for tires according to claim 1 or 2, wherein a mass ratio (B/A) of a content of the silane coupling agent (B) to a content of the silane coupling agent (A) is 0.3 or more and less than 3.

5. The rubber composition for tires according to claim 1 or 2, wherein the filler further contains carbon black, and
a content ratio of the silica in a total amount of the silica and the carbon black is 80 mass% or more and less than 100 mass%.

6. The rubber composition for tires according to claim 1 or 2, wherein a content of the silica is 20 parts by mass or more and less than 100 parts by mass per 100 parts by mass of the rubber component.

7. The rubber composition for tires according to claim 1 or 2, wherein the silane coupling agent (A) has 20 to 75 carbon atoms.

8. The rubber composition for tires according to claim 1 or 2, wherein the rubber component contains 15 mass% or more and less than 85 mass% of the styrene-butadiene rubber (A).

9. The rubber composition for tires according to claim 1 or 2, wherein the rubber component contains 15 mass% or more and less than 85 mass% of the styrene-butadiene rubber (B).

10. The rubber composition for tires according to claim 1 or 2, further comprising 1 to 50 parts by mass of a resin per 100 parts by mass of the rubber component.

11. The rubber composition for tires according to claim 1 or 2, wherein the resin is a hydrogenated resin.

12. A tread rubber made of the rubber composition for tires according to claim 1 or 2.

13. A tire comprising the tread rubber according to claim 12.
